# EUROPEAN PATENT SPECIFICATION

(11) **EP 4 422 784 B1**
(45) Date of publication and mention of the grant of the patent: **23.09.2026**
(21) Application number: 22813147.0
(22) Date of filing: 28.10.2022
(51) Int. Cl.: B01D 61/12

(54) **MEMBRANE FILTRATION SYSTEM**
MEMBRANFILTRATIONSSYSTEM
SYSTÈME DE FILTRATION DE MEMBRANE

(30) Priority: 29.10.2021 EP 21205628
(43) Date of publication of application: 04.09.2024
(73) Proprietor: Grundfos Holding A/S, 8850 Bjerringbro (DK)
(72) Inventor: DOMINIAK, Dominik Marek, 8850 Bjerringbro (DK); D'ANTONIO, Sébastien, 8850 Bjerringbro (DK); YANGALI-QUINTANILLA, Victor Augusto, 8850 Bjerringbro (DK); VILLACORTE, Loreen Ople, 8850 Bjerringbro (DK); KNUDSEN, Mads Veje, 8850 Bjerringbro (DK)
(74) Representative: Patentanwälte Hemmer Lindfeld Frese Partnerschaft mbB
(86) International application number: PCT/EP2022/080196
(87) International publication number: WO 2023/073169

(56) References cited:
- US-A1- 2012 103 906
- US-A1- 2014 311 981
- US-A1- 2016 243 502
- US-A1- 2019 209 968
- US-A1- 2019 224 624
- US-A1- 2020 009 506
- US-A1- 2020 016 538
- US-A1- 2020 023 317
- US-A1- 2020 031 691
- US-A1- 2020 038 808
- US-B2- 10 532 938
- US-B2- 10 960 355

## Description

The invention refers to a membrane filtration system and a retrofit concentrate draining device configured for use in a membrane filtration system.

Known membrane filtration systems like nano filtration systems or reverse osmosis filtration systems, for example, often comprise a recirculation or crossflow allowing a recovery of the concentrate. It is known to have a draining valve in said crossflow line to partly discharge the concentrate during operation. In some applications, it is known to periodically flush the membrane feed a concentrate channel by opening a respective valve. During the operation at high recoveries, the concentration or salinity in the concentrate increases. The changing concentration has a great influence on the formation or accumulation of organic and inorganic foulness in the membrane filters and the energy consumption of the overall system.

US2012103906A1 discloses a reverse osmosis retrofit system in which pressurised brine from a conventional RO unit feeds a closed-circuit desalination loop with recirculation of concentrate and periodic discharge and replacement of brine to achieve higher recovery and improved efficiency.

US 2019/0209968 A1 discloses a membrane filtration system with a recirculation of the concentrate by use of a concentrate pump. There is provided a brine discharge valve. For discharging the brine this valve can be opened. At the same time the concentrate recirculation can be closed such that brine is discharged instead of circulating the brine.

US 2020/0031691 A1 refers to a brine removal device for a desalination apparatus. In this brine removal device there is provided an air lift for dispersing the brine into sea water.

It is the object of the invention to provide an improved membrane filtration system allowing a more exact control of the entire filtration process. This object is achieved by a membrane filtration system having the features defined in claim 1 and by a concentrate draining device for a membrane filtration system having the features defined in claim 21. Preferred embodiments are defined in the dependent subclaims, the following description and the accompanying drawings.

The membrane filtration system according to the invention comprises at least one membrane with an inlet, and a concentrate outlet on one side of this membrane. Furthermore, the filtration system comprises a permeate outlet on the opposite side of the at least one membrane. Thus, a part of the liquid entering the inlet passes the at least one membrane and leaves through the permeate outlet. Another part of the liquid entering the inlet is retained by the membrane and eventually discharged as a concentrate through a concentrate outlet. For example, salts in the liquid are retained by the membrane so that the concentrate is a brine having an increased concentration of salts. The system may further comprise a recirculation channel connecting the concentrate outlet and the inlet such that the concentrate can be circulated on the first side of the membrane, defining the inlet or concentrate side of the membrane. There may be provided at least one pump in the recirculation channel circulating the brine or concentrate on the inlet side of the membrane. During the circulation, the concentration or salinity of the concentrate increases due to the liquid passing the membrane.

Instead of a passive concentrate outlet like in a system using a concentrate outlet valve, the membrane filtration system according to the invention comprises an active concentrate discharging or draining device configured to remove or discharge a defined amount or flow of concentrate from the system, i. e. to precisely discharge a defined amount of concentrate. The concentrate draining device preferably with its inlet side is connected to the concentrate outlet of the membrane and with its outlet side is connected to a concentrate discharge line or a concentrate reservoir receiving the discharged concentrate. The concentrate draining device comprises at least one pump and is connected to said concentrate outlet. The pump actively drains out or discharges a part of the concentrate, preferably from the crossflow or recirculation channel. Thereby, the pump allows a controlled concentrate output or discharge allowing to precisely adjust the concentrate output and the recovery, in particular a recovery rate during the filtration process. This allows to control the entire filtration process more precisely, for example, to increase the efficiency and/or to reduce to amount of energy required for filtration. Preferably, the pump of the concentrate draining device can be operated to provide a continuous or a quasi continuous concentrate output of the filtration system. This allows a continuous concentrate output and a continuous permeate output of the system at the same time, allowing a production without interruption. The use of a pump allows to more precisely control the amount of concentrate discharge, as for example possible with a valve or regulating valve.

The concentrate draining device according to the invention using a pump may be used in a filtration system without a recirculation of concentrate as well as in a membrane filtration system having a recirculation channel connecting the concentrate outlet and the inlet allowing a recirculation of a concentrate. In case there is provided a recirculation channel, the concentrate draining device preferably branches from said circulation channel or is connected to this recirculation channel, respectively. This allows to recirculate a part of the concentrate, whereas another part is discharged via the concentrate draining device. The recirculation channel preferably comprises a recirculation pump which is arranged in the recirculation channel. This recirculation pump is arranged and configured such that it recirculates the brine or concentrate through said recirculation channel and along the first side or inlet side of the at least one membrane.

According to a preferred embodiment of the invention said concentrate draining device comprises a flushing valve, which preferably is placed in parallel to the at least one pump of the concentrate draining device, i.e. in a conduit parallel to the at least one pump. The flushing valve allows to flush the membrane filtration system, i. e. to preferably exchange the entire amount of liquid contained in the filtration system. The flushing valve may have a greater cross section than the at least one pump, i.e. the valve may allow a higher flow than the at least one pump or several pumps. This allows to have a greater flow during flushing than during concentrate discharge provided by the pump or pumps. Preferably, a flushing is initiated in case that the concentration or salinity in the crossflow reaches or exceeds a predefined threshold. This means also by a continuous draining via the concentrate draining device the concentration or salinity may continuously increase requiring a flushing after a certain period of operation, i. e. from time to time. Instead of initiating the flushing on basis of a detected salinity or concentration, it would also be possible to initiate the flushing in a different way, for example after a predefined time period or a predefined amount of liquid filtered or a predefined pressure and/or a predefined concentration or salinity in the permeate, or when a target recovery for a given filtration cycle has been reached. Preferably, the flushing valve is controlled by the control device of the concentrate draining device. Thus, the control device may activate the flushing valve to initiate the flushing of the filtration system, for example on basis of a sensor signal or after a predefined period of operation. During crossflow-operation, the concentrate concentration increases from a concentration close to feed water concentration at the start to a highest steady state concentration. This steady state concentration depends on the permeate flow to feed flow ratio or water recovery. Forward flushing preferably is performed before the concentration reaches steady state, thereby reducing the concentration back down to initial level. Thus, the membrane filtration system is operated at repeating cycles of filtration and flushing with the concentrate concentration changing within each cycle.

The at least one pump is a positive displacement pump, which isa metering pump allowing to provide a precise fluid flow and exact control of the amount of concentrate output from the filtration system. The positive displacement pump, for example, may be a membrane or piston pump. Such a reciprocating pump like a membrane or piston pump may for example be controlled in stroke speed and/or stroke length to adjust the flow of concentrate output.

According to a further embodiment of the invention, the concentrate draining device comprises at least one pressure reduction valve, which is placed in front or upstream of the at least one pump of the concentrate draining device. In case that more than one pump is used in the concentrate draining device there may be a single pressure reduction valve in front or upstream of all these pumps. Alternatively, there may be provided a separate pressure reduction valve in front or upstream of each of the several pumps. The pressure reduction valve or valves ensure a desired inlet pressure for the at least one pump, in particular the positive displacement pump. Preferably, a pressure reduction valve or valves ensure a maximum inlet pressure for the at least one pump and in particular reduces the pressure to the maximum inlet pressure or below a maximum inlet pressure. This is in particular of importance with increasing pressure in the crossflow or recirculation channel occurring from increasing salinity during the operation.

According to a further embodiment, the concentrate draining device comprises a control device configured to control the amount of concentrate which is drawn off by the at least one pump. Thus, the control device preferably is configured to control the pump, in particular control the flow produced by the pump, i.e. to adjust the feed rate of the pump, for example by control of the stroke length and/or stroke speed of a reciprocating positive displacement pump. The control device may be an electronic device, preferably comprising a microcontroller executing a control software, which configured to provide the desired control functionality.

The amount of concentrate, which is discharged or drawn off, may be predefined in the control device or input by an operator using suitable input means of the control device or being connected to the control device. Preferably, the control device is configured such that the amount of concentrate drawn off is controlled to achieve a target recovery rate, which target recovery rate preferably is in the range between 50% and 99,9%, i.e. near 100%. The recovery rate is defined as the ratio of feed or inlet flow and the permeate output or flow produced in a cycle. The cycle is defined as a filtration cycle between two flushings of the inlet and concentration channel. Thereby, the recovery rate may be defined as a net recovery rate considering the loss during flushing or the recovery rate without considering this loss. The recovery rate may be monitored, preferably continuously monitored in the system by use of suitable sensors.

Preferably, at least one flow sensor is arranged in the permeate outlet and/or in said inlet, which at least one flow sensor is connected to the control device, i.e. communicating with the control device, such that the control device receives sensor data representing the flow. Preferably there are provided at least two flow sensors, one in the inlet and one in the permeate outlet, or one in the inlet and one in the concentrate outlet. This allows a direct measurement or calculation of the permeate flow. The control device preferably is configured such that it controls a concentrate draining device, in particular the at least one pump on basis of the output signal of the at least one flow sensor, preferably several flow sensors, for example one flow sensor in the inlet and one flow sensor in the permeate outlet. By this, the recovery rate, as defined above, can be calculated, and the recovery rate can be controlled to achieve a target recovery rate as explained above. The concentrate outlet flow is known by the control device, since it is set by the control device and provided by respective control of the at least one pump in the concentrate draining device. As an alternative or in addition, a flow sensor in the recirculation channel may directly detect the crossflow or circulating flow of concentrate. All the required sensors are connected to, i.e. communicating with the control device, so that the control device can carry out a control of the pump on basis of the received sensor data. The connection for communication of the sensors and the control device may be a wired or wireless connection.

According to a further possible embodiment, there may be arranged at least one concentration sensor or salinity sensor in the flow path of the concentrate and/or the permeate, for example the concentrate outlet, wherein the concentration sensor preferably is a conductivity sensor. Furthermore, a pressure sensor may be used as a concentration sensor, since the pressure increases with the salt concentration. Thus, the pressure can be used at least as a rough approximation of the salt concentration. The output signal of such concentration sensor may be used for control of the at least one pump in the concentrate draining device to keep the concentration or salinity of the concentrate in a predefined range. A concentration sensor may be placed in the flow path of the concentrate, for example the concentrate outlet in a recirculation channel. Furthermore, it may be possible to alternatively or additionally place a concentration sensor in the permeate outlet to monitor a salt concentration in the permeate. According to a special embodiment a single concentration sensor may be used for both, monitoring the concentration in the permeate during filtration and to monitor the concentration in the inlet or recirculation channel during flushing. For example, the concentration sensor may be arranged in a channel which by use of valves can be selectively connected with a flow path for the permeate, such that the permeate flows through the channel with the concentration sensor, or connected with a flow path of the concentrate, i.e. that the concentrate flows through the flow path containing the concentration sensor.

Preferably, such a concentration sensor is connected to the control device and the control device is configured such that the opening of the flushing valve is controlled on basis of the output of the concentration sensor. Alternatively or additionally, the closing of the flushing valve may be controlled on basis of the output of the concentration sensor. For example, the flushing valve may be opened in case that the concentration detected by the concentration sensor reaches a predefined threshold, i. e. when the concentration reaches a predefined maximum value. Alternatively, the opening and/or closing of the flushing valve may be controlled depending on time and/or volume, for example for opening the valve this may be the production time and/or the filtered volume.

According to a further embodiment, the control device is configured such that the flushing valve is closed after predefined period of time, or when a predefined amount of liquid has been discharged through the flushing valve or when the concentration of the concentrate reaches a predefined minimum or stabilizes at a minimum value, as explained above. The respective values may be detected by one or more suitable sensors. For detecting the concentration, a concentration sensor as mentioned above may be used. According to the special embodiment explained above, this may be the same concentration sensor used during filtration for monitoring the concentration in the permeate. To detect the amount of liquid discharged, a respective flow sensor may be used. Those sensors may be connected to the control device such that the control device may control the flushing valve on basis of respective sensor signals received from the sensors. In an alternative method, for determining the need of a flushing, the concentration of salt in the brine may be estimated. For example, the feed conductivity can be multiplied by a concentration factor coming from the volumes of feed, concentrate and permeate.

According to a special embodiment, the control device may be integrated into a pump unit constituting the at least one pump of the concentrate draining device. This simplifies the installation, since the concentrate draining device may be configured as an autonomous device. Furthermore, such design allows to integrate a concentration draining device as disclosed above into an existing membrane filtration system, i. e. to retrofit an existing membrane filtration system. Preferably, the control device constituting the control of the concentrate draining device is realized as a software application executed by electronics of a pump unit, i. e. preferably the electronics executing the pump control of the pump itself. This means that, for example, the same microprocessor and same storage means, which are provided for the pump control can be used for executing a control program for the entire concentrate draining device, for example additionally controlling flushing valves, etc.

According to a special embodiment the control device configured for control of the concentrate draining device may additionally control the recirculation of the concentrate in a recirculation channel, for example by control of a recirculation pump.

The membrane filtration system may for example be a reverse osmosis or nano filtration system. In those systems, a crossflow of concentrate may be used in which a concentrate draining device as described before is beneficial. Another example is a crossflow microfiltration or an ultrafiltration membrane system. In those systems, a concentrate draining device is beneficial in limiting accumulation of particles and/or particle plugging in membrane channels.

As mentioned above, it may be possible to retrofit an existing membrane filtration system by a concentrate draining device as explained before. For this purpose, the invention provides a concentrate discharging or draining device which is configured to be integrated into existing membrane filtration systems. By introducing such a retrofit concentrate draining device a conventional membrane filtration system may be upgraded to a membrane filtration system as described above. The concentrate draining device comprises an interface, which is configured for connection to a concentrate outlet of a membrane filtration system. The interface may be configured corresponding to the concentrate outlet of an existing membrane filtration system. For example, the interface may have a flange or thread corresponding to an existing flange or a thread of a concentrate outlet of an existing membrane filtration system. Furthermore, the concentrate draining device comprises at least one pump being at least one positive displacement pump, in the form of a metering pump. This pump is connected to the interface for connection to a concentrate outlet. Concerning preferred details of the pump, it is referred to the description above. The concentrate draining device further comprises a control device configured for controlling the at least one pump. The at least one pump and this control device are configured such that the at least one pump actively draws off a desired amount of concentrate from a membrane filtration system, to which the concentrate draining device is connected. In particular, the control device may be configured to carry out a control as described above with reference to the membrane filtration system according to the invention. Preferred embodiments of the membrane filtration system as described above should be regarded as preferred embodiments of the retrofit concentrate draining device according to the invention, too. Preferably, the control device is an independent control device for the concentrate draining deceive such that no connection to a further control device of the membrane filtration system is necessary. However, the control device of the concentrate draining device may have a suitable data interface for communication with a control device of the membrane filtration system and/or any other control or monitoring device.

According to a possible embodiment, the concentrate draining device comprises a flushing valve arranged in parallel to the at least one pump. This flushing valve preferably is controlled by said control device. The control device may open and close the flushing valve as described above, preferably on basis of sensor signals received by sensors in said concentrate draining device or connected to sensor inputs of the control device.

Preferably, the control device of the concentrate draining device is configured such that it controls the at least on pump to achieve a predefined recovery rate in the membrane filtration system. Preferably, the control device is configured such that the predefined recovery rate can directly by set in said control device. Nevertheless, as described before, it may be possible to provide a communication interface allowing to receive information about the desired recovery rate from other or external control devices or input devices. The control device controls the flow of the pump to achieve the predefined recovery rate, for example by controlling the speed of a drive motor of said pump.

The concentrate draining device may comprise at least one sensor input provided in said control device and/or at least on sensor connected with said control device. Preferably, the sensor is a concentrate sensor arranged in a concentrate and/or permeate flow path and/or at least one flow sensor. This allows to directly provide the required sensor signals to the control devices allowing the control device to control the concentrate draining device independent from other control systems of the filtration system. Preferably, the control device and the connected sensors or sensors integrated into the concentrate draining device to provide an autonomous control. The flow and/or concentrate sensor may, for example, be used to control a flushing valve as described above. Furthermore, the pump for draining concentrate may be controlled on basis of sensor signals received from those sensors, for example to meet said predefined recovery rate.

The concentrate draining device additionally may comprise at least one pressure reduction valve arranged upstream or in front of the at least one pump to provide a constant, preferably reduced inlet pressure for the pump or pumps, in particular at least one positive displacement or metering pump.

In the following, the invention is described by way of example with reference to the figures. In these:
- Figure 1: schematically shows a membrane filtration system according to a first embodiment
- Figure 2: schematically shows a membrane filtration system according to a second embodiment,
- Figure 3: shows three diagrams of conductivity, permeate flow and cumulative concentrate volume over time during the operation of the filtration system,
- Figure 4: schematically shows a membrane filtration system without a recovery channel and
- Figure 5: schematically shows an alternative arrangement of the recirculation pump in a membrane filtration system as shown in figure 1.

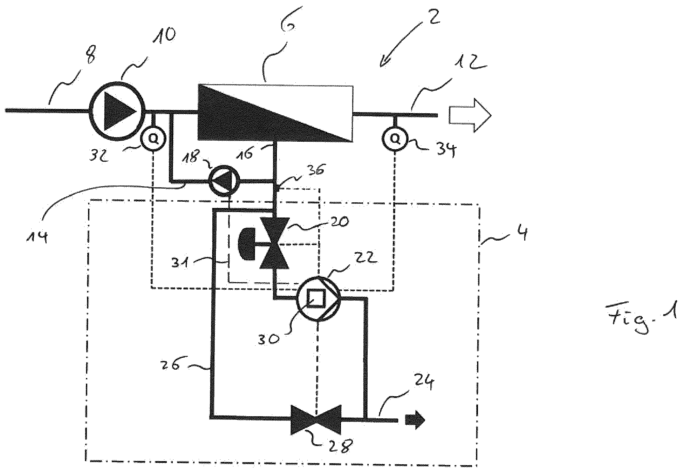

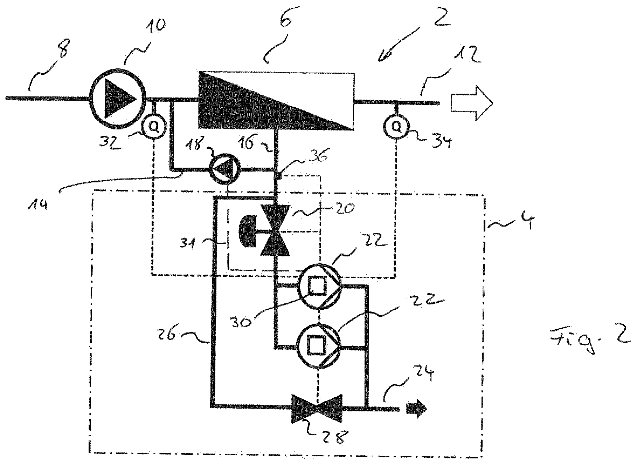

The membrane filtration system according to figures 1 and 2 comprises a standard membrane filtration system, for example a reverse osmosis filtration system provided with a concentrate draining device 4. The membrane filtration system comprises a membrane 6 with an inlet 8 on a first side of the membrane 6. In the inlet, there is arranged a feed pump 10. On the second side of the membrane 6,there is a permeate outlet 12. This filtration system is provided with a recirculation channel 14 for circulating a concentrate or retentate, respectively, on the first or the entrance side of the membrane 6. This recirculation channel connects a concentrate outlet 16 and the inlet 8 behind the feed pump 10. In the said recirculation channel 14, there is arranged a recirculation or crossflow pump 18 for establishing and controlling the crossflow or recirculation flow in the recirculation channel 14.

Connected to the concentrate outlet 16, there is the concentrate discharging or draining device 4 forming an active concentrate discharge or draining system. Downwards to the concentrate outlet, there is a pressure reduction valve 20 arranged upstream or in front of a pump in form of a at least one metering pump 2. In the first embodiment according to figure 1, there is arranged a single metering pump, whereas in the second embodiment according to figure 2, there are arranged two metering pumps 2 in parallel. These two metering pumps 2 may be operated simultaneously or in an alternating manner to, for example increase the output and/or to ensure a continuous operation, for example during maintenance. The metering 2 or metering pumps 2 may be reciprocating pumps, for example membrane pumps, which can be controlled in speed and/or stroke length to control and adjust a flow produced by the metering pump 2. The metering 2 or metering pumps 2 allow to precisely control the flow or amount of concentrate drained out of the recirculation channel 14. This allows to exactly set a recovery rate as explained below. The pressure reduction valve 20 in front of the one or two metering pumps 22 reduces the pressure in the concentrate outlet to an allowable maximum inlet pressure for the metering pump or pumps 22. In particular, the pressure reduction valve 20 may provide a constant inlet pressure for the metering pump or pumps 22 independent from the pressure present in the concentrate outlet 16. The pressure in the concentrate outlet 16 may change depending on the salinity or concentration of the concentrate.

The concentrate draining device 4 and in particular the outlet of the pump or pumps 22 define a brine outlet 24 which is configured to be connected to a brine or concentrate discharge line or a brine or concentrate reservoir for further handling the discharged concentrate or brine.

In parallel to the pressure reduction valve 20 and the metering pump 22 or the metering pumps 22, there is arranged a flushing channel 26 with a flushing valve 28. The flushing channel 26 directly connects the concentrate outlet 16 and the brine outlet 24, thereby bypassing the metering pump 22 or metering pumps 22. The flushing valve 28 allows a higher flow compared to the metering pump or metering pumps 22.

Integrated into the metering pump 22, in the example according to figure 2 in the first metering pump 22, there is a control device 30, which forms the entire control for the concentrate draining device. In this example, the control device 30 is integrated into the pump 22, preferably in form of an integrated controller controlling the pump 22 itself and the entire concentrate draining device. The controller for the concentrate draining device, however, may also be realized as a separate control device. Connected to the control device 30, there are two flow sensors 32 and 34. The flow sensor 32 is arranged the inlet 8, in this example behind the feed pump 10 and upwards from the connection of the crossflow channel. The second flow sensor 34 is arranged in the permeate outlet 12. Both flow sensors 32 and 34 are connected to the control device 30. Furthermore, in this example, there is provided a conductivity sensor 36 on the concentrate outlet 16 to detect the conductivity representing the salinity of the brine inside the concentrate outlet 16. Also, the conductivity sensor 36 is connected to the control device 30. Furthermore, the control device 30 is connected to the flushing valve 28 for controlling the flushing valve 28. In this embodiment, furthermore, also the pressure reduction valve 20 is controlled by the control device 30. In the example according to figure 2, the control device 30 is additionally connected to a second metering pump 22, which may be controlled as a slave pump, for example switched on and off by a command output from the control device 30.

The control device 30 controls the recovery rate on basis of the flow signals received from the flow sensors 32, 34. The recovery rate represents the ratio of feed and produced liquid, i. e. permeate. Thus, the recovery rate is a ratio of the flow in the inlet 8 and the permeate flow in the permeate outlet 12. The recovery rate depends on the amount of concentrate drained from the concentrate outlet. This concentrate draining flow can be changed by changing the feed rate of the pump 22 or pumps 22, for example by changing the drive speed or the stroke length. The concentrate draining flow, produced by the pump or pumps 22 is controlled to keep the recovery rate in a predefined range, for example between a 50% and a 99,9%, i.e. near 100%.

Additionally, the control device 30 may be configured to control the recirculation pump 18 to control or adjust the cross flow or recirculation flow through the recirculation channel 14. This allows to more precisely control the filtering process. However, this is an optional feature. Therefore, the communication line 31 in figures 1 and 2 is optional.

However, during production, the concentration or salinity in the concentrate will increase. Therefore, from time-to-time flushing will become necessary. For such flushing the flushing valve 28 is opened by the control device 30. The need for a flushing may be detected by a conductivity sensor 36, detecting the conductivity of the concentrate, which is representive for the salinity. In an alternative embodiment a conductivity sensor may be arranged in the permeate outlet monitoring the concentration or salinity of the permeate. An increase of the concentration or salinity may indicate the need of a flushing.

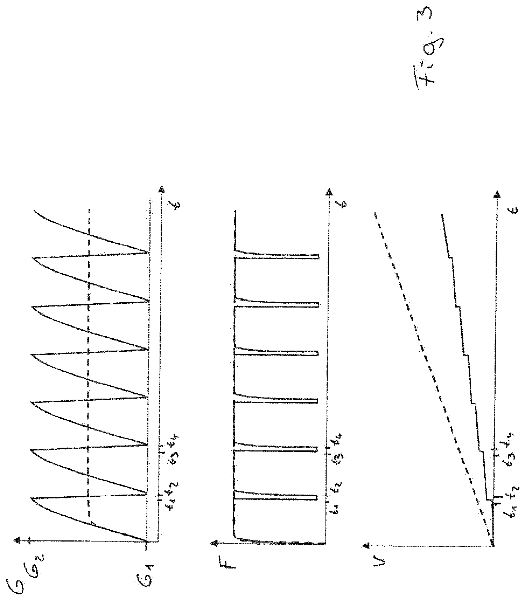

. Figure 3 shows three diagrams showing the conductivity G, the permeate flow F and the cumulative concentrate volume V over time t. In the three diagrams the solid lines represent the operation according to the invention, whereas the dashed lines represent the operation according to a prior art filtration system. As can be seen in the upper diagram representing the conductivity G, the concentration in the feed or recirculation channel according to the invention is not constant, contrary to a prior art system. During production at the beginning, the flushing valve 28 is closed, and the concentrate is partly drained off by use of the pump 22. However, as can be seen in the upper diagram in figure 3, the salinity constantly increases until the point in time t₁. At point t₁, the conductivity reaches a maximum G₂, which is detected by the control device 30. Upon reaching this maximum G₂, the control device 30 opens the flushing valve 28, so that the concentrate on the entrance side of the membrane is flowing directly into the brine outlet 24. The flushing valve 28 is kept open until the water in the filtration system is exchanged with fresh feed water, which can be indicated by the conductivity reaching a minimum value or minimum threshold G₁. In the diagram in figure 3, this threshold G₁ is reached at the point t₂. When reaching the minimum or feed conductivity G₁, the control device 30 initiates a closing of the flushing valve 28. Then, during the further production, the conductivity increases again until the maximum value G₂ is reached at point in time t₃. Then, a further flushing is initiated. This may be repeated during the entire production. The conductivity G₁ represents a feed concentration. As can be seen in the diagram in the middle in figure 3 the permeate flow decreases during the flushing, i.e. between the points in time t₁ and t₂ or t₃ and t₄. As can be seen in the lower diagram a cumulative concentrate volume V during the operation according to the invention increases stepwise during the flushing, contrary to the operation according to a prior art system showing a constantly increasing volume V (dashed line). Furthermore, it can be seen that the total cumulative concentrate volume is reduced by the operation according to the invention.

The active draining by use of the concentrate draining device 4 allows a constant production of brine or concentrate and permeate. Both, the concentrate and the permeate are continuously produced and discharged. However, during flushing the output of the brine or concentrate increases as shown in figure 3 (lower diagram). Nevertheless, at the same time, the production of the permeate can be continued, but on a decreased level as shown in the diagram in the middle in figure 3.

The concentrate draining device 4 may be provided as an upgrade kit, which can be connected to a concentrate outlet 16 of an existing membrane filtration system 2. The control device 30 may have a sensor input allowing to connect existing flow sensors 32 and 34 in the conventional membrane filtration system and to receive sensor signals from the respective sensors. Alternatively, the sensors may be a part of the retrofit concentrate draining device and may be attached or inserted into the membrane filtration system 2 to be upgraded by the concentrate draining device. Such design allows to introduce a concentrate draining device 4 as described into an existing membrane filtration systems 2.

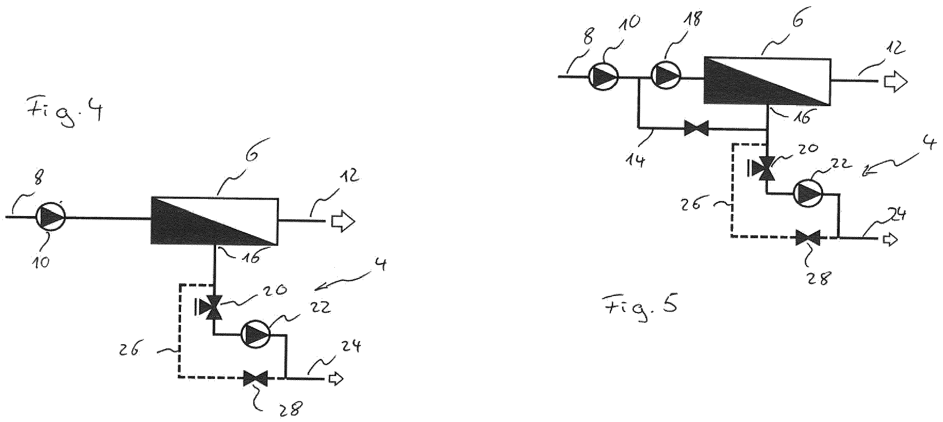

Figure 4 shows an embodiment according to the invention not having the recirculation channel 14 as shown in the embodiments according to figures 1 and 2. In this embodiment the concentrate draining device 14 is directly connected to the concentrate outlet 16 of the membrane unit. The several sensors are not shown in figure 4, however, the arrangement of the sensors as discussed with reference to figures 1 and 2 may be the same. Furthermore, also an arrangement of two or more metering pumps 22 in parallel as shown in figure 2 may be used in the embodiment as shown in figure 4.

Figure 5 shows a further alternative embodiment having a different position of the circulation pump 18. In the embodiment according to figure 15 the recirculation pump 18 is arranged in the inlet or feed line 8 downstream the feed pump 10 with the recirculation channel 14 connected to the inlet or feed channel between the feed pump 10 and the recirculation pump 18. This arrangement of the recirculation pump 18 is beneficial, since the recirculation pump 18 can be flushed during the flushing when the flushing valve 18 is open. Also in figure 5 the sensors and the control device are not shown. The arrangement of the sensors and the control device may be the same as shown in figure 1 and 2. Furthermore, also in this embodiment two or more metering pumps 22 in parallel as shown in figure 2 may be used.

### List of reference designations

- 2: filtration system
- 4: concentrate draining device
- 6: membrane
- 8: inlet
- 10: feed pump
- 12: permeate outlet
- 14: recirculation channel
- 16: concentrate outlet
- 18: recirculation pump
- 20: pressure reduction valve
- 22: metering pump
- 24: brine outlet
- 26: flushing channel
- 28: flushing valve
- 30: control device
- 31: communication line
- 32, 34: flow sensors
- 36: conductivity sensor
- t: time
- G: conductivity
- F: flow
- V: volume

## Claims

1. Membrane filtration system having at least one membrane (6), an inlet (8) and a concentrate outlet (16) on one side of the membrane (6), a permeate outlet (12) on the other side of the membrane (6),
**characterized by**
a concentrate draining device (4) configured for discharging a concentrate from the filtration system and comprising at least one positive displacement pump being a metering pump (22), which pump is connected to said concentrate outlet (16) and configured for drawing off concentrate from said concentrate outlet (16).

2. Membrane filtration system according to claim 1, **characterized in that** the concentrate draining device (4) with its inlet side is connected to the concentrate outlet (16) and with its outlet side is connected to a concentrate discharge line or concentrate reservoir.

3. Membrane filtration system according to claim 1 or 2, **characterized by** a recirculation channel (14) connecting the concentrate outlet (16) and the inlet (8), wherein preferably the concentrate draining device (16) branches off from said recirculation channel (14).

4. Membrane filtration system according to one of the preceding claims, **characterized by** a recirculation channel (14) connecting the concentrate outlet (16) and the inlet (8) and comprising a recirculation pump (18).

5. Membrane filtration system according to one of the preceding claims, **characterized in that** said concentrate draining device (4) comprises a flushing valve, which preferably is placed in parallel to the at least one pump (22) of the concentrate draining device (4).

6. Membrane filtration system according to one of the preceding claims, **characterized in that** the concentrate draining device (4) comprises a pressure reduction valve (20) which is placed in front of the pump (22) of the concentrate draining device (4).

7. Membrane filtration system according to one of the preceding claims, **characterized in that** the concentrate draining device (4) comprises a control device (30) configured to control the amount of concentrate which is drawn off, wherein the control device (30) preferably is configured to control the at least one pump (22) and further preferably configured to adjust the feed rate of the at least one pump.

8. Membrane filtration system according to claim 7, **characterized in that** the control device (30) is configured such that the amount of concentrate drawn off is controlled to achieve a target recovery rate, which target recovery rate preferably is between 50% and 99,9%.

9. Membrane filtration system according to claim 7 or 8, **characterized in that** at least one flow sensor (32, 34) is arranged in the permeate outlet and/or in said inlet, which at least one flow sensor (32, 34) is connected to the control device (30), and that said control device is configured such that it controls the concentrate draining device (4) on basis of the output signal of the at least one flow sensor (32, 34).

10. Membrane filtration system according to one of the preceding claims, **characterized in that** the flushing valve (28) is controlled by the control device (30) of the concentrate draining device (4).

11. Membrane filtration system according to one of the preceding claims, **characterized by** at least one concentration sensor (36) in a flow path of the concentrate and/or the permeate, wherein the concentration sensor (36) preferably is connected to the control device (30) and the control device (30) is configured such that the opening of the flushing valve (28) is controlled on basis of the output of the concentration sensor (36).

12. Membrane filtration system according to one of the preceding claims, **characterized in that** the control device (30) is configured such that the flushing valve (28) is opened depending on production time and/or volume or when the concentration reaches a predefined maximum value (62).

13. Membrane filtration system according to one of the preceding claims, **characterized in that** the control device (30) is configured such that the flushing valve (38) is closed after a predefined period of time, or when a predefined amount of liquid has been discharged via the flushing valve (38), or when the concentration of the concentrate reaches a predefined minimum (61) or stabilizes at a minimum value.

14. Membrane filtration system according to one of the preceding claims, **characterized in that** the control device (30) is integrated into a pump unit constituting the at least one pump (22) of the concentrate draining device (4).

15. Membrane filtration system according to one of the preceding claims **characterized in that** the membrane filtration system (2) is a reverse osmosis or nano filtration system.

## Patentansprüche

1. Membranfiltrationssystem, das mindestens eine Membran (6), einen Einlass (8) und einen Konzentratauslass (16) auf einer Seite der Membran (6), einen Permeatauslass (12) auf der anderen Seite der Membran (6) aufweist,
**gekennzeichnet durch**
eine Konzentratablaufeinrichtung (4), die zum Abgeben eines Konzentrats aus dem Filtrationssystem konfiguriert ist und mindestens eine Verdrängerpumpe umfasst, die eine Dosierungspumpe (22) ist, wobei die Pumpe mit dem Konzentratauslass (16) verbunden und zum Abziehen von Konzentrat aus dem Konzentratauslass (16) konfiguriert ist.

2. Membranfiltrationssystem nach Anspruch 1, **dadurch gekennzeichnet, dass** die Konzentratablaufeinrichtung (4) mit ihrer Einlassseite mit dem Konzentratauslass (16) verbunden ist und mit ihrer Auslassseite mit einer Konzentratabgabeleitung oder einem Konzentratreservoir verbunden ist.

3. Membranfiltrationssystem nach Anspruch 1 oder 2, **gekennzeichnet durch** einen Rückführungskanal (14), der den Konzentratauslass (16) und den Einlass (8) verbindet, wobei vorzugsweise der Konzentratauslass (16) von dem Rückführungskanal (14) abzweigt.

4. Membranfiltrationssystem nach einem der vorhergehenden Ansprüche, **gekennzeichnet durch** einen Rückführungskanal (14), der den Konzentratauslass (16) und den Einlass (8) verbindet und eine Rückführungspumpe (18) umfasst.

5. Membranfiltrationssystem nach einem der vorhergehenden Ansprüche, **dadurch gekennzeichnet, dass** die Konzentratablaufeinrichtung (4) ein Spülventil umfasst, das vorzugsweise parallel zu der mindestens einen Pumpe (22) der Konzentratablaufeinrichtung (4) platziert ist.

6. Membranfiltrationssystem nach einem der vorhergehenden Ansprüche, **dadurch gekennzeichnet, dass** die Konzentratablaufeinrichtung (4) ein Druckminderungsventil (20) umfasst, das vor der Pumpe (22) der Konzentratablaufeinrichtung (4) platziert ist.

7. Membranfiltrationssystem nach einem der vorhergehenden Ansprüche, **dadurch gekennzeichnet, dass** die Konzentratablaufeinrichtung (4) eine Steuerungseinrichtung (30) umfasst, die dafür konfiguriert ist, die Menge an Konzentrat, die abgezogen wird, zu regeln, wobei die Steuerungseinrichtung (30) vorzugsweise dafür konfiguriert ist, die mindestens eine Pumpe (22) zu steuern, und ferner vorzugsweise dafür konfiguriert, die Fördermenge der mindestens einen Pumpe einzustellen.

8. Membranfiltrationssystem nach Anspruch 7, **dadurch gekennzeichnet, dass** die Steuerungseinrichtung (30) derart konfiguriert ist, dass die abgezogene Menge an Konzentrat geregelt wird, um eine Zielrückgewinnungsrate zu erreichen, wobei die Zielrückgewinnungsrate vorzugsweise zwischen 50 % und 99,9 % beträgt.

9. Membranfiltrationssystem nach Anspruch 7 oder 8, **dadurch gekennzeichnet, dass** mindestens ein Durchflusssensor (32, 34) in dem Permeatauslass und/oder in dem Einlass angeordnet ist, wobei der mindestens eine Durchflusssensor (32, 34) mit der Steuerungseinrichtung (30) verbunden ist, und dadurch, dass die Steuerungseinrichtung derart konfiguriert ist, dass sie die Konzentratablaufeinrichtung (4) auf Grundlage des Ausgangssignals des mindestens einen Durchflusssensors (32, 34) steuert.

10. Membranfiltrationssystem nach einem der vorhergehenden Ansprüche, **dadurch gekennzeichnet, dass** das Spülventil (28) durch die Steuerungseinrichtung (30) der Konzentratablaufeinrichtung (4) gesteuert wird.

11. Membranfiltrationssystem nach einem der vorhergehenden Ansprüche, **gekennzeichnet durch** mindestens einen Konzentrationssensor (36) in einer Strömungsbahn des Konzentrats und/oder des Permeats, wobei der Konzentrationssensor (36) vorzugsweise mit der Steuerungseinrichtung (30) verbunden ist und die Steuerungseinrichtung (30) derart konfiguriert ist, dass die Öffnung des Spülventils (28) auf Grundlage der Ausgabe des Konzentrationssensors (36) gesteuert wird.

12. Membranfiltrationssystem nach einem der vorhergehenden Ansprüche, **dadurch gekennzeichnet, dass** die Steuerungseinrichtung (30) derart konfiguriert ist, dass das Spülventil (28) in Abhängigkeit von Produktionszeit und/oder -volumen oder, wenn die Konzentration einen vordefinierten maximalen Wert (62) erreicht, geöffnet wird.

13. Membranfiltrationssystem nach einem der vorhergehenden Ansprüche, **dadurch gekennzeichnet, dass** die Steuerungseinrichtung (30) derart konfiguriert ist, dass das Spülventil (38) nach einer vordefinierten Zeitspanne oder, wenn eine vorbestimmte Menge an Flüssigkeit über das Spülventil (38) abgegeben worden ist, oder, wenn die Konzentration des Konzentrats ein vordefiniertes Minimum (61) erreicht oder sich bei einem minimalen Wert stabilisiert, geschlossen wird.

14. Membranfiltrationssystem nach einem der vorhergehenden Ansprüche, **dadurch gekennzeichnet, dass** die Steuerungseinrichtung (30) in eine Pumpeneinheit integriert ist, welche die mindestens eine Pumpe (22) der Konzentratablaufeinrichtung (4) darstellt.

15. Membranfiltrationssystem nach einem der vorhergehenden Ansprüche, **dadurch gekennzeichnet, dass** das Membranfiltrationssystem (2) ein Umkehrosmose- oder Nanofiltrationssystem ist.

## Revendications

1. Système de filtration à membrane présentant au moins une membrane (6), une entrée (8) et une sortie de rétentat (16) sur un côté de la membrane (6), une sortie de perméat (12) sur l'autre côté de la membrane (6),
**caractérisé par**
un dispositif de drainage de rétentat (4) configuré pour décharger un rétentat du système de filtration et comprenant au moins une pompe à déplacement positif étant une pompe doseuse (22), laquelle pompe est connectée à ladite sortie de rétentat (16) et configurée pour tirer le rétentat hors de ladite sortie de rétentat (16).

2. Système de filtration à membrane selon la revendication 1, **caractérisé en ce que** le dispositif de drainage de rétentat (4) est raccordé à la sortie de rétentat (16) par son côté entrée et est raccordé à une ligne de décharge de rétentat ou un réservoir de rétentat par son côté sortie.

3. Système de filtration à membrane selon la revendication 1 ou 2, **caractérisé par** un canal de recirculation (14) raccordant la sortie de rétentat (16) et l'entrée (8), dans lequel de préférence le dispositif de drainage de rétentat (16) bifurque dudit canal de recirculation (14).

4. Système de filtration à membrane selon l'une des revendications précédentes, **caractérisé par** un canal de recirculation (14) raccordant la sortie de rétentat (16) et l'entrée (8) et comprenant une pompe à recirculation (18).

5. Système de filtration à membrane selon l'une des revendications précédentes, **caractérisé en ce que** ledit dispositif de drainage de rétentat (4) comprend un robinet de rinçage qui est placé de préférence parallèlement à l'au moins une pompe (22) du dispositif de drainage de rétentat (4).

6. Système de filtration à membrane selon l'une des revendications précédentes, **caractérisé en ce que** le dispositif de drainage de rétentat (4) comprend un détendeur (20) qui est placé devant la pompe (22) du dispositif de drainage de rétentat (4).

7. Système de filtration à membrane selon l'une des revendications précédentes, **caractérisé en ce que** le dispositif de drainage de rétentat (4) comprend un dispositif de commande (30) configuré pour commander la quantité de rétentat qui est tirée, dans lequel le dispositif de commande (30) est de préférence configuré pour commander l'au moins une pompe (22) et est en outre de préférence configuré pour ajuster le débit de l'au moins une pompe.

8. Système de filtration à membrane selon la revendication 7, **caractérisé en ce que** le dispositif de commande (30) est configuré de telle façon que la quantité de rétentat tirée est commandée pour atteindre un taux de récupération cible, lequel taux de récupération cible est de préférence entre 50 % et 99,9 %.

9. Système de filtration à membrane selon la revendication 7 ou 8, **caractérisé en ce qu'**au moins un capteur de débit (32, 34) est agencé dans la sortie de perméat et/ou dans ladite entrée, lequel au moins un capteur de débit (32, 34) est connecté au dispositif de commande (30), et que ledit dispositif de commande est configuré de telle façon qu'il commande le dispositif de drainage de rétentat (4) en se basant sur le signal de sortie de l'au moins un capteur de débit (32, 34).

10. Système de filtration à membrane selon l'une des revendications précédentes, **caractérisé en ce que** le robinet de chasse (28) est commandé par le dispositif de commande (30) du dispositif de drainage de rétentat (4).

11. Système de filtration à membrane selon l'une des revendications précédentes, **caractérisé par** au moins un capteur de concentration (36) dans un trajet de débit du rétentat et/ou du perméat, dans lequel le capteur de concentration (36) est connecté de préférence au dispositif de commande (30) et le dispositif de commande (30) est configuré de telle façon que l'ouverture du robinet de chasse (28) est commandée en se basant sur la sortie du capteur de concentration (36).

12. Système de filtration à membrane selon l'une des revendications précédentes, **caractérisé en ce que** le dispositif de commande (30) est configuré de telle façon que le robinet de chasse (28) est ouvert en fonction du temps et/ou du volume de production ou lorsque la concentration atteint une valeur maximale prédéfinie (62).

13. Système de filtration à membrane selon l'une des revendications précédentes, **caractérisé en ce que** le dispositif de commande (30) est configuré de telle façon que le robinet de chasse (38) est fermé après une période de temps prédéfinie ou lorsqu'une quantité prédéfinie de liquide a été déchargée par le biais du robinet de chasse (38), ou lorsque la concentration du rétentat atteint un minimum prédéfini (61) ou se stabilise à une valeur minimale.

14. Système de filtration à membrane selon l'une des revendications précédentes, **caractérisé en ce que** le dispositif de commande (30) est intégré dans une unité de pompe constituant l'au moins une pompe (22) du dispositif de drainage de rétentat (4).

15. Système de filtration à membrane selon l'une des revendications précédentes, **caractérisé en ce que** le système de filtration à membrane (2) est une osmose inverse ou un système de nano-filtration.
